(19) Europäisches Patentamt
European Patent Office
Office européen des brevets

(11) **EP 2 643 274 B1**

(12) **FASCICULE DE BREVET EUROPEEN**

(45) Date de publication et mention de la délivrance du brevet:
**17.01.2018 Bulletin 2018/03**

(51) Int Cl.:
***C03C 17/00*** *(2006.01)*    ***E01C 9/00*** *(2006.01)*
***E04B 5/00*** *(2006.01)*    ***E04F 15/08*** *(2006.01)*

(21) Numéro de dépôt: **11799775.9**

(22) Date de dépôt: **24.11.2011**

(86) Numéro de dépôt international:
**PCT/FR2011/052747**

(87) Numéro de publication internationale:
**WO 2012/069764 (31.05.2012 Gazette 2012/22)**

(54) **PANNEAU DE VERRE ANTIDERAPANT ET PROCEDE DE FABRICATION**

RUTSCHFESTE GLASSCHEIBE UND HERSTELLUNGSVERFAHREN

ANTI-SKID GLASS PANEL AND MANUFACTURING PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2010 FR 1059783**

(43) Date de publication de la demande:
**02.10.2013 Bulletin 2013/40**

(73) Titulaire: **Saint-Gobain Glass France
92400 Courbevoie (FR)**

(72) Inventeurs:
• **SAVARY, Jean-Philippe
F-75010 Paris (FR)**

• **LANGOHR, David
F-78700 Conflans Sainte Honorine (FR)**
• **MARLIN, Samuel
F-13750 Plan D'orgon (FR)**
• **JONCOURT, Béatrice
F-60710 Chevrières (FR)**

(74) Mandataire: **Saint-Gobain Recherche
Département Propriété Industrielle
39 Quai Lucien Lefranc
93300 Aubervilliers (FR)**

(56) Documents cités:
**WO-A1-01/74739    WO-A1-03/008355
DE-A1- 10 003 404    JP-A- 2002 265 235**

**EP 2 643 274 B1**

**Description**

La présente invention se rapporte au domaine des panneaux de verre antidérapants.

Les panneaux de verre sont par nature résistants et peuvent être utilisés en tant qu'éléments de sol, notamment des planchers, des marches d'escalier, des dalles de balcon, de rampes d'accès, de passerelles ou de ponts. Toutefois, ces panneaux peuvent être glissants, en particulier lorsqu'ils sont humides, et pour certaines utilisations il est impératif de leur apporter une certaine rugosité afin de les rendre antidérapants.

Il est connu de coller sur le verre un matériau à surface rugueuse, par exemple sous la forme de plots ou de bandes qui peuvent être disposés sur l'ensemble du verre ou sur une partie seulement, selon un motif régulier ou irrégulier. Cependant, le matériau est peu résistant à l'usage et il a tendance à se décoller et à perdre sa rugosité.

Il est également connu un panneau de verre muni d'un revêtement de surface constitué d'une fritte de verre contenant des particules à arêtes vives notamment des grains de silicate ou d'oxyde métallique (EP-A-0513 707). La proportion des particules à arêtes vives varie de 5 à 30 % et les particules présentent une taille moyenne de grain de 50 $\mu$m et une taille de grain maximale de 250 $\mu$m. Si un tel panneau a effectivement des propriétés antidérapantes intéressantes, il n'en demeure pas moins que les particules, du fait de leurs arêtes très vives, présentent des risques de blessures en cas de chute. En outre ces particules ont tendance à se détacher de la fritte de verre, laissant ainsi des cavités à bords coupants - donc potentiellement dangereux - dans lesquelles s'accumulent les salissures.

Dans DE 196 29 241 C2, il est décrit une plaque de verre antidérapante pour des projecteurs de lumière destinés à être encastrés dans le sol. La plaque comprend 2 à 14 % en poids de particules abrasives à base de corindon, d'oxyde de zirconium, de carbure de silicium, de nitrure de bore, de diamant ou de titane qui présentent une taille de grains comprise entre 10 et 150 $\mu$m et/ou entre 200 et 400 $\mu$m. Dans l'exemple 1, les particules abrasives sont appliquées par sérigraphie sous forme d'une pâte contenant 96 % d'une fritte de verre, 2 % de corindon ayant une taille de grain de 280 $\mu$m et 2 % de corindon ayant une taille de grain de 110 $\mu$m. Les particules perdent rapidement leur caractère anguleux sous l'effet notamment du passage des piétons.

Dans DE 100 03 404 C2, il est décrit une plaque de verre ou de céramique antidérapante revêtue d'une couche poreuse renfermant des particules de verre ou de céramique qui dépassent de la couche. Les particules ont une forme sphérique et une surface lisse qui est supposée réduire le risque de blessures et améliorer le nettoyage de la plaque.

WO 2008/023128 propose un élément vitré antidérapant comportant un revêtement de surface rugueux composé d'une fritte de verre et de 5 à 30 % en poids de particules anguleuses en céramique dont la taille est comprise entre 50 et 250 $\mu$m et la taille moyenne est de 100 $\mu$m.

JP2002265235 décrit une feuille de verre recouverte d'une couche antidérapante obtenue en mélangeant des particules d'alumine, de carbure de silicium ou de grenat avec des particules de fritte de verre à bas point de fusion.

La présente invention a pour but de proposer un panneau de verre qui présente une bonne durabilité et peut être facilement nettoyé, ce panneau ayant notamment une bonne résistance à l'usure, des arêtes suffisamment vives pour donner les propriétés antidérapantes mais ne risquant pas de blesser et une transparence élevée.

Pour atteindre ce but, la présente invention propose un panneau de verre comportant au moins une feuille de verre dont au moins une de ses faces présente au moins une zone rugueuse comprenant des particules de corindon enchâssées dans une matrice à base d'une fritte de verre, lesdites particules présentant un rapport de la densité non tassée à leur masse volumique au moins égal à 0,425, une distribution granulométrique telle que le $d_{90}$ est inférieur ou égal à 130 $\mu$m et une porosité inférieure à 50 %.

Il est essentiel que les particules présentent ces trois caractéristiques pour pouvoir être utilisées dans le panneau de verre selon la présente invention.

Par « zone rugueuse », on entend une zone à rugosité accrue par rapport à la surface de la feuille de verre nu.

Par « particules », on entend ici des particules anguleuses qui présentent des arêtes suffisamment vives pour que les piétons puissent y marcher sans glisser, sans toutefois les blesser en cas de chute. Les particules présentent en outre une dureté élevée, notamment supérieure à 16 GPa, et une résistance importante à l'écrasement.

Le terme « $d_{90}$ » a la signification connue dans le domaine des poudres, à savoir qu'il définit la taille telle que 90 % des particules, en poids, ont une taille inférieure à $d_{90}$. Dans ce domaine, on parle indifféremment de « particules » ou de « grains »). De même, comme indiqué par la suite, les termes « $d_{50}$ » et $d_{10}$ » qualifient la taille telle que 50 % et 10 % des particules, en poids, ont une taille inférieure à $d_{50}$ et $d_{10}$, respectivement.

Dans le cadre de l'invention, il faut comprendre par « la matrice à base d'une fritte de verre », le produit résultant de la fusion de la fritte de verre à une température suffisante pour permettre la formation d'une couche de verre ayant une porosité ouverte suffisamment faible pour qu'un liquide ne puisse pas traverser ladite couche. En règle générale, la matrice ne présente pas de porosité ouverte.

Par « fritte », on entend une composition vitrifiable sous la forme d'une poudre et à base d'oxydes qui peuvent éventuellement être des pigments.

Les particules en céramique conformes à l'invention sont constituées d'un matériau non métallique et non organique. La céramique est l'$\alpha$-Al$_2$O$_3$ (corindon).

Les particules en céramique peuvent être constituées de particules constituées d'une seule céramique ou d'un mélange de particules constituées de céramiques différentes.

La densité non tassée des particules caractérise notamment la forme des grains. Plus la forme des particules est sphérique, plus la valeur de la densité non tassée est élevée. Le rapport choisi pour caractériser les particules de céramique (rapport entre la densité non tassée des particules et leur masse volumique) prend en considération la nature chimique de chaque matériau, chacun ayant une masse volumique différente.

S'agissant des particules en corindon, le rapport de la densité non tassée à leur masse volumique est au moins égal à 0,425 et de préférence au moins égal à 0,435.

Selon l'invention encore, les particules en céramique présentent une distribution granulométrique telle que le $d_{90}$ est inférieur ou égal à 130 $\mu$m, de préférence le $d_{50}$ varie de 90 à 120 $\mu$m, avantageusement de 90 à 100 $\mu$m, et mieux encore le $d_{10}$ est inférieur ou égal à 40 $\mu$m.

Toujours selon l'invention, la porosité des particules mesurée dans les conditions exposées plus loin est inférieure ou égale à 50 %, de préférence inférieure ou égale à 20 %, avantageusement inférieure à égale à 5 %, notamment inférieure ou égale à 2 % et mieux encore inférieure à 0,5 %.

Les particules en corindon, peuvent être obtenues par le procédé connu opérant par fusion d'oxyde d'aluminium dans un four à arcs électriques. La solidification de l'oxyde d'aluminium est contrôlée au moyen d'électrodes montantes. L'utilisation d'un oxyde d'aluminium ayant une pureté très élevée (de l'ordre de 99,9 % en poids) permet de d'obtenir un corindon «blanc » qui, du fait de sa très faible teneur en impuretés, notamment en fer, présente une couleur neutre particulièrement appréciée dans l'application visée.

Le produit solidifié obtenu par le procédé précité est concassé, broyé et tamisé afin de ne retenir que les particules ayant le rapport de la densité non tassée à la masse volumique, la distribution granulométrique et la porosité requis. Les particules de corindon ainsi obtenues possèdent des arêtes émoussées et de ce fait présentent un risque très faible de blessure.

Comme indiqué précédemment, la fritte est une poudre à base d'oxydes aptes à donner un verre qui va former la matrice dans laquelle les particules en céramique sont enchâssées. Les oxydes peuvent contenir des pigments renfermant du manganèse, du chrome, du cuivre et/ou du titane.

De manière générale, la fritte de verre est exempte d'oxyde de plomb PbO pour des raisons liées à la préservation de l'environnement. La fritte de verre est une fritte contenant de la silice $SiO_2$ ainsi que de l'oxyde de bismuth $Bi_2O_3$ et/ou de l'oxyde de zinc ZnO. La proportion de $SiO_2$ dans la fritte varie de 35 à 75 % en poids, la proportion de $Bi_2O_3$ varie de 20 à 40 % en poids, et mieux encore de 25 à 30 %, et la proportion de ZnO varie de 4 à 10 % en poids.

La feuille de verre selon l'invention peut être constitué de tout type de verre, par exemple un verre silico-sodocalcique, notamment obtenu par le procédé « Float ».

La présente invention a également pour objet un procédé de fabrication du panneau de verre décrit précédemment. Ce procédé comprend les étapes consistant à préparer une pâte comprenant la ou des frittes de verre, les particules en céramique et un médium organique, appliquer la pâte ainsi obtenue sur le verre par sérigraphie, éventuellement sécher la feuille de verre et traiter ladite feuille à une température permettant de cuire la fritte de verre.

La sérigraphie est une technique d'impression bien connue qui utilise un écran de sérigraphie constitué d'un tissu sur lequel le(s) motif(s) à imprimer sur le verre est(sont) reproduit(s) et d'un râcle permettant d'appliquer une force de cisaillement suffisante pour faire passer la pâte à travers les mailles de l'écran par les ouvertures correspondant au(x) motif(s) à imprimer et déposer ladite pâte sur la feuille de verre.

La pâte servant à la sérigraphie est obtenue en mélangeant la ou les frittes de verre, les particules en céramique et un médium organique.

Comme cela a déjà été indiqué, les particules en céramique peuvent être constituées d'un seul type de céramique ou consister en un mélange de particules de plusieurs types de céramique.

La quantité de particules en céramique dans la pâte représente 15 à 25 % en poids de la fritte de verre, de préférence est égal à 20 %.

Le médium organique permet d'ajuster la viscosité de la pâte et de fixer temporairement la fritte de verre et les particules en céramique avant l'étape subséquente de cuisson. Le médium doit pouvoir être éliminé dès le début de cette étape afin de ne pas créer de pores dans la matrice finale.

De manière générale, le médium organique comprend au moins un solvant, par exemple un mélange d'alcools terpéniques (« huile de pin »). Il peut comprendre en outre une ou plusieurs résine(s) qui améliore(nt) la fixation temporaire des particules en céramique et de la fritte sur le panneau en verre.

La viscosité de la pâte de sérigraphie, avant l'introduction des particules en céramique, varie généralement de 50 à 70 Poises, et préférentiellement est de l'ordre de 60 Poises.

L'écran de sérigraphie doit présenter une ouverture de maille compatible avec la taille des particules en céramique présentes dans la pâte : elle doit suffisamment importante pour laisser passer la totalité desdites particules au travers de l'écran mais pas trop élevée afin de ne pas les « noyer » dans la fritte de verre car dans ce cas, les particules ne pourraient plus conférer le caractère rugueux souhaité.

Les fils qui constituent l'écran de sérigraphie peuvent être des fils en acier ou en matière polymérique, par exemple polyester. Leur diamètre varie de 80 à 140 $\mu$m, et il est de préférence de l'ordre de 100 $\mu$m.

L'épaisseur moyenne de pâte humide déposée sur le verre après l'impression par sérigraphie peut varier dans une large mesure, de 50 à 250 $\mu$m, de préférence n'excède pas 100 $\mu$m, et avantageusement n'excède pas 60 $\mu$m.

La feuille de verre imprimée est ensuite séchée selon une méthode connue de l'homme du métier, par exemple au moyen de lampes infrarouge, afin d'éliminer le(s) solvant(s) contenu(s) dans le médium organique. La température du séchage varie généralement de 70 à 155°C et de préférence est au moins égale à 140°C.

La feuille de verre séchée est ensuite traitée à une température dite de cuisson qui permet à la fritte de verre de fondre pour former une couche de verre qui fixe les particules en céramique à la surface de la feuille de verre. La température de cuisson doit être suffisamment élevée pour cuire la fritte de verre, et éventuellement tremper le verre, mais pas trop importante afin que la feuille de verre ne présente pas des déformations apparentes indésirables. En général, la température de cuisson varie de 600 à 700°C, de préférence de 620 à 650°C

La feuille de verre comportant les motifs rugueux peut être utilisé seule ; dans ce cas il est préférable que la feuille ait été préalablement traitée thermiquement dans des conditions de température telles que le verre final soit au moins durci, et de préférence soit trempé, afin que la feuille de verre puisse être utilisé en toute sécurité.

De préférence, notamment pour des raisons de sécurité des personnes, la feuille de verre est associée à une ou plusieurs autres feuilles de verre par l'intermédiaire d'une ou plusieurs feuilles d'une matière thermoplastique ayant des propriétés adhésives à chaud pour former un panneau de verre feuilleté.

A titre d'exemple de feuille de matière thermoplastique, on peut citer les feuilles de butyrate de butyral de polyvinyle (PVB), d'éthylène-acétate de vinyle (EVA) et de polyuréthane.

Le nombre de feuilles de verre dans le panneau feuilleté est fonction de sa taille et de la sollicitation mécanique à laquelle il est soumis. En général le panneau comprend au plus 6 feuilles de verre y compris la feuille de verre contenant les motifs rugueux, et de préférence 2 à 4 feuilles de verre.

L'association des feuilles de verre et des feuilles de matière thermoplastique est effectuée selon les méthodes connues, notamment utilisant un autoclave.

Les méthodes de mesures utilisées pour déterminées les caractéristiques des particules en céramique comprises dans le panneau de verre selon la présente invention sont les suivantes :

La densité non tassée (DNT) est mesurée selon la norme ANSI B74.4 - 1992 utilisant l'installation « A ». La densité non tassée est définie comme étant la masse de particules contenues dans un volume défini, exprimée en g/cm³. Le dispositif utilisé pour effectuer cette mesure comporte un entonnoir en acier inoxydable dont les dimensions sont fixées par la norme et un mécanisme d'arrêt se présentant sous la forme d'un ballon dans lequel les particules sont déchargées en sortie de l'entonnoir. La distance entre le point le plus bas de la zone de décharge de l'entonnoir et le fond du cylindre d'une capacité de 100 cm³ dans lequel tombe les particules est également prédéfinie par la norme.

La mesure de densité non tassée doit être effectuée à une température comprise entre 18 et 30°C. Un bécher de 150 ml est rempli complètement de particules dont on cherche à mesurer la densité non tassée, puis est vidé en totalité dans l'entonnoir fermé. Le cylindre de récupération est centré sous la sortie de l'entonnoir. Lors de l'ouverture du mécanisme d'arrêt, les particules tombent librement dans le cylindre qui est alors pesé. La densité non tassée peut ainsi être calculée, en effectuant le rapport entre le poids net des particules contenues dans le cylindre (en grammes) et le volume du cylindre qui est de 100 cm³.

Les masses volumiques de composés constituant les particules en céramique mis en oeuvre dans les panneaux en particulier selon la présente invention, sont données à titre d'exemple dans le tableau suivant :

| Composé | Masse volumique (g.cm-3) |
|---|---|
| Corindon | 3,97 |
| Oxyde de zirconium (zircone) | 5,6 |
| Carbure de silicium | 3,21 |
| Nitrure de silicium | 3,44 |
| Borure de zirconium | 6,1 |

La granulométrie des particules est mesurée par tamisage sur une tamiseuse Ro-Tap équipée de tamis analytiques Tyler conformes à la norme ASTM E11 et ayant des mailles de 130, 106 et 40 $\mu$m. La tamiseuse opère avec un nombre d'oscillations et de coups prédéfinis dans la norme.

La porosité des particules (PG) est mesurée par pycnométrie à l'hélium, calculée selon la formule suivante :

$$PG = (DG - DP/DG) \times 100$$

dans laquelle :

DG représente la densité des particules
DP représente la densité de la poudre.

La résistance au glissement est mesurée :

- selon la norme EN 1341 de février 2003 (norme 1) qui simule des conditions de glissement, en milieu humide (100 % d'humidité relative), d'une chaussure posée à plat sur la surface à tester : un coefficient de glissement faible est représentatif de conditions de glissement importantes,
- la norme ASTM 1679-04 (norme 2) qui est représentative des conditions de glissement d'un talon de chaussure sur la surface à tester horizontale et humide (100 % d'humidité relative).

La résistance en milieu salin ($SO_2$) et humide (40°C ; humidité relative : 100 %) dans les conditions de la norme EN 1096-2 est appréciée visuellement au regard de la couleur (modification et/ou blanchiment) et de la présence de défauts (craquelures, irisations, décollements) dans la matrice en verre.

L'invention est illustrée au moyen de l'exemple suivant, non limitatif.

## <u>EXEMPLE 1</u>

A 100 parts en poids d'une fritte de verre, on ajoute un médium organique (référence 801022 ; commercialisé par Ferro) en une quantité permettant l'obtention d'une pâte présentant une viscosité de l'ordre de 60 Poises (mesurée à l'aide d'un viscosimètre Haake VT550 ; vitesse de rotation : 23,2 rpm).

La fritte de verre a la composition suivante (en pourcentage pondéral) : 54 % de $SiO_2$ 28,5 % de $Bu_2O_3$, 8 % de $Na_2O$, 3,5 % d'$Al_2O_3$ et 3 % de $TiO_2$, le reste étant constitué de BaO ; CaO, $K_2O$, $P_2O_5$, SrO et ZnO.

On ajoute ensuite à la pâte 20 parts en poids de particules de corindon blanc, puis le mélange obtenu est homogénéisé dans un mélangeur mécanique.

Les particules de corindon blanc présentent une densité non tassée égale à 1,74 g/cm$^3$, et une masse volumique de 3,97 g/cm$^3$ soit un rapport de la densité non tassée à la masse volumique égal à 0,438, une distribution granulométrique telle que $d_{90}$ = 123 $\mu$m, $d_{50}$ = 95 $\mu$m et $d_{10}$ < 40 $\mu$m, et une porosité inférieure à 0,5 %.

On utilise la pâte précitée dans un dispositif de sérigraphie comprenant un écran constitué d'un tissu de fils de polyester de 100 $\mu$m de diamètre comprenant 32 fils/cm, un râcle en carbone et une feuille de verre silico-sodo-calcique trempée thermiquement.

Trois écrans de sérigraphie sont utilisés qui permettent de fournir des motifs rugueux de dimension et de forme différentes :

a) un motif unique (aplat) sur la totalité de la surface de la feuille de verre,
b) une pluralité de motifs carrés de 4 mm de côtés espacés de 4 mm,
c) une pluralité de lignes continues de 10 mm de large, espacées de 10 mm.

L'épaisseur moyenne de la pâte humide déposée sur le verre varie entre 50 et 60 $\mu$m.

Les feuilles de verre sont introduites dans un dispositif de séchage équipé de lampes infrarouges opérant à une température de l'ordre de 145 à 155°C afin d'éliminer le solvant organique contenu dans le médium organique et de consolider le motif rugueux.

Les feuilles sont ensuite placées dans un four à 630°C où la fritte de verre fond et forme la matrice qui enchâsse les particules de corindon blanc.

Sur les feuilles obtenues :
- avant traitement en milieu salin et humide, la valeur de la résistance au glissement est donnée dans le tableau suivant :

| Motif | Norme 1 | Norme 2 |
|---|---|---|
| a) aplat | 58 | 1 |
| b) carrés | 35 | 0,8 |
| c) lignes | 30 | 0,9 |

- après traitement en milieu salin et humide :

- la résistance au glissement est inchangée (mesurée selon les normes 1 et 2 précitées),
- on n'observe aucune craquelure, un très léger changement de couleur (blanchiment), pas d'irisation et aucun décollement de la matrice à base de fritte de verre.

### EXEMPLE 2 (comparatif)

On procède dans les conditions de l'exemple 1 modifiées en ce qu'on utilise :

- une fritte de verre à base de ZnO (référence VJN 957 ; commercialisée par Ferro),
- des particules de corindon blanc présentant une densité non tassée égale à 1,02 g/cm$^3$ (soit un rapport de la densité non tassée à la masse volumique égal à 0,257) et un $d_{50}$ égal à 60 $\mu$m,
- un écran comprenant 43 fils/cm, un râcle en caoutchouc et une épaisseur moyenne de la pâte déposée égale à 50 $\mu$m.

Sur les feuilles de verre obtenues :
- avant traitement en milieu salin et humide, la valeur de la résistance au glissement est donnée dans le tableau suivant :

| Motif | Norme 1 | Norme 2 |
|---|---|---|
| a) aplat | 35 | 0,8 |

- après traitement en milieu salin et humide :

- la résistance au glissement est inchangée (mesurée selon les normes 1 et 2 précitées),
- on n'observe la présence de nombreuses craquelures, un changement important de couleur (blanchiment), des irisations et aucun décollement de la matrice à base de fritte de verre.

### EXEMPLE 3 (comparatif)

On procède dans les conditions de l'exemple 1 modifié en ce que les particules de corindon blanc présentent un d50 égal à 184 $\mu$m.
Lors de l'application de la pâte dans le dispositif de sérigraphie, on constate qu'une partie des particules ne traverse pas les mailles de l'écran ce qui ne permet pas d'avoir une impression correcte du(des) motif(s) sur la feuille de verre.

### Revendications

1. Panneau de verre comportant au moins une feuille de verre dont au moins une de ses faces présente au moins une zone rugueuse comprenant des particules de corindon enchâssées dans une matrice à base de fritte de verre, **caractérisé en ce que** lesdites particules ont un rapport de la densité non tassée à la masse volumique au moins égal à 0,425, la densité non tassée étant mesurée selon la norme ANSI B74.4-1992 utilisant l'installation « A », une distribution granulométrique telle que le $d_{90}$ est inférieur ou égal à 130 $\mu$m et une porosité inférieure à 50 %, la fritte de verre étant exempte de plomb et comprenant de la silice $SiO_2$ de l'oxyde de bismuth $Bi_2O_3$ et/ou de l'oxyde de zinc ZnO, dans les proportions suivantes (en % en poids) :

   $SiO_2$ 35 - 75 %
   $Bi_2O_3$ 20 - 40 %, de préférence 25 - 30 %
   ZnO 4-10%.

2. Panneau selon la revendication 1, **caractérisé en ce que** les particules sont des particules de corindon ayant un rapport de la densité non tassée à la masse volumique au moins égal à 0,435.

3. Panneau selon l'une des revendications 1 ou 2, **caractérisé en ce que** les particules en céramique présentent une distribution granulométrique telle que le $d_{50}$ varie de 90 à 120 $\mu$m, de préférence de 90 à 100 $\mu$m, et avantageusement le $d_{10}$ est inférieur ou égal à 40 $\mu$m.

4. Panneau selon la revendication 2 ou 3, **caractérisé en ce que** la porosité des particules est inférieure ou égale à 20 %, de préférence inférieure à égale à 5 %, avantageusement inférieure ou égale à 2 % et mieux encore inférieure à 0,5 %.

5. Panneau selon l'une des revendications 1 à 4, **caractérisé en ce que** la feuille de verre est durcie ou trempée.

6. Procédé de fabrication d'un panneau selon l'une des revendications 1 à 5, comprenant les étapes suivantes consistant à

   - préparer une pâte comprenant la ou des frittes de verre, les particules de corindon et un médium organique,
   - appliquer la pâte ainsi obtenue sur le verre par sérigraphie,
   - éventuellement sécher la feuille de verre, et
   - traiter ladite feuille à une température permettant de cuire la fritte de verre.

7. Utilisation du panneau selon l'une des revendications 1 à 5 en tant que de dalle antidérapante, en particulier de dalle de sol.


**Patentansprüche**

1. Glasscheibe, aufweisend mindestens ein Glasband, von dem mindestens eine seiner Seiten mindestens eine raue Zone, umfassend in eine Matrix auf der Basis von Glasfritte eingelassene Korundpartikel, aufweist, **dadurch gekennzeichnet, dass** die Partikel ein Verhältnis der nicht verdichteten Dichte zur Volumenmasse von mindestens gleich 0,425, wobei die nicht verdichtete Dichte gemäß der Norm ANSI B74.4-1992 bei Verwendung der Anlage "A" gemessen wird, eine derartige granulometrische Verteilung, dass $d_{90}$ kleiner oder gleich 130 $\mu$m ist, und eine Porosität unter 50 % haben, wobei die Glasfritte bleifrei ist und Siliziumdioxid $SiO_2$ Wismutoxid $Bi_2O_3$ und/oder Zinkoxid ZnO in den folgenden Anteilen (in Gew.-%) umfasst:

   $SiO_2$ 35 - 75 %
   $Bi_2O_3$ 20 - 40 %, vorzugsweise 25 - 30 %
   ZnO 4 - 10 %.

2. Scheibe nach Anspruch 1, **dadurch gekennzeichnet, dass** die Partikel Korundpartikel in einem Verhältnis der nicht verdichteten Dichte zur Volumenmasse von mindestens gleich 0,435 sind.

3. Scheibe nach einem der Ansprüche 1 oder 2, **dadurch gekennzeichnet, dass** die Keramikpartikel eine derartige granulometrische Verteilung aufweisen, dass $d_{50}$ von 90 bis 120 $\mu$m, vorzugsweise von 90 bis 100 $\mu$m, schwankt und $d_{10}$ in vorteilhafter Weise kleiner oder gleich 40 $\mu$m ist.

4. Scheibe nach Anspruch 2 oder 3, **dadurch gekennzeichnet, dass** die Porosität der Partikel kleiner oder gleich 20 %, vorzugsweise kleiner bis gleich 5 %, in vorteilhafter Weise kleiner oder gleich 2 % und noch besser kleiner als 0,5 % ist.

5. Scheibe nach einem der Ansprüche 1 bis 4, **dadurch gekennzeichnet, dass** das Glasband gehärtet oder getempert ist.

6. Verfahren zur Herstellung einer Scheibe nach einem der Ansprüche 1 bis 5, umfassend die folgenden Schritte, die bestehen im:

   - Vorbereiten einer Masse, die die Glasfritte oder Glasfritten, die Korundpartikel und ein organisches Medium umfasst,
   - Auftragen der derart erhaltenen Masse auf das Glas im Siebdruck,
   - eventuell Trocknen des Glasbands, und
   - Behandeln des Bands bei einer Temperatur, die das Brennen der Glasfritte erlaubt.

7. Verwendung der Scheibe nach einem der Ansprüche 1 bis 5 als rutschfeste Fliese, insbesondere als Bodenfliese.

**Claims**

1.  A glass panel comprising at least one glass sheet, at least one of the faces of which has at least one rough area comprising corundum particles embedded in a matrix based on a glass frit, **characterized in that** said particles have an untamped bulk density/true density ratio at least equal to 0.425, the untamped bulk density being measured according to the ANSI B74.4 (1992) standard using the "A" installation, a particle size distribution such that $d_{90}$ is less than or equal to 130 $\mu$m, and a porosity of less than 50%, the glass frit being lead-free and comprising silica $SiO_2$ bismuth oxide $Bi_2O_3$ and/or zinc oxide ZnO, in the following proportions (in % by weight):

    | | |
    |---|---|
    | $SiO_2$ | 35 - 75% |
    | $Bi_2O_3$ | 20 - 40%, preferably 25 - 30% |
    | ZnO | 4 - 10%. |

2.  The panel as claimed in claim 1, **characterized in that** the particles are corundum particles having an untamped bulk density/true density ratio at least equal to 0.435.

3.  The panel as claimed in one of claims 1 or 2, **characterized in that** the ceramic particles have a particle size distribution such that $d_{50}$ varies from 90 to 120 $\mu$m, preferably from 90 to 100 $\mu$m, and advantageously $d_{10}$ is less than or equal to 40 $\mu$m.

4.  The panel as claimed in one of claims 2 or 3, **characterized in that** the porosity of the particles is less than or equal to 20%, preferably less than or equal to 5%, advantageously less than or equal to 2% and better still less than 0.5%.

5.  The panel as claimed in one of claims 1 to 4, **characterized in that** the glass sheet is toughened or tempered.

6.  A process for manufacturing a panel as claimed in one of claims 1 to 5, comprising the following steps consisting in:

    - preparing a paste comprising the glass frit or frits, the corundum particles and an organic medium;
    - applying the paste thus obtained by screen printing on the glass;
    - optionally drying the glass sheet; and
    - treating said sheet at a temperature for firing the glass frit.

7.  The use of the panel as claimed in one of claims 1 to 5 as an anti-skid tile, in particular a floor tile.

**EP 2 643 274 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0513707 A
- DE 19629241 C2
- DE 10003404 C2
- WO 2008023128 A
- JP 2002265235 B